# EUROPÄISCHE PATENTSCHRIFT

(11) **EP 0 736 194 B1**
(45) Veröffentlichungstag und Bekanntmachung des Hinweises auf die Patenterteilung: **25.11.1998**
(21) Anmeldenummer: 95904510.5
(22) Anmeldetag: 20.12.1994
(51) Int. Cl.: G02B 6/44

(54) **OPTISCHE FASER MIT EINER FARBKENNZEICHNUNG**
OPTICAL FIBRE WITH A COLOUR MARKING
FIBRE OPTIQUE AVEC UN MARQUAGE EN COULEURS

(30) Priorität: 23.12.1993 DE 4344223; 05.03.1994 DE 4407406
(43) Veröffentlichungstag der Anmeldung: 09.10.1996
(73) Patentinhaber: KABEL RHEYDT Aktiengesellschaft, D-41238 Mönchengladbach (DE)
(72) Erfinder: HOFFART, Michael, D-42579 Heiligenhaus (DE); ROSENKRANZ, Jürgen, D-41068 Mönchengladbach (DE); BARTLING, Franz-Peter, D-40221 Düsseldorf (DE); GLESSNER, Bertram, D-41189 Mönchengladbach (DE); LYSSON, Hans-Jürgen, D-41352 Korschenbroich (DE)
(74) Vertreter: Mende, Eberhard, Dipl.-Ing.
(86) Internationale Anmeldenummer: EP9404241
(87) Internationale Veröffentlichungsnummer: WO9517695

(56) Entgegenhaltungen:
- EP-A- 0 436 221
- EP-A- 0 562 259
- EP-A- 0 581 680
- DE-A- 3 427 835
- DE-A- 3 636 268
- FR-A- 2 648 270
- JP-A-57 040 203

## Beschreibung

Die vorliegende Erfindung betrifft eine optische Faser mit einem Faserkern und einem den Kern umschließenden Mantel aus einer oder mehreren Kunststoffschichten sowie einer örtlich begrenzten Farbkennzeichnung auf oder in einen Kunststoffschicht bzw. der äußeren der Kunststoffschichten.

Fasern der gattungsgemäßen Art sind hinlänglich bekannt. Zur Farbkennzeichnung und damit zum Auseinanderhalten der Adern bei der Spleiß- oder Anschlußtechnik wird auf die äußerste Kunststoffumhüllung der Ader eine Ringsignierung, beispielsweise mittels durch Anwendung von Infrarotstrahlung aushärtender Kunststoffe aufgebracht, üblich sind aber auch Strich- oder Streifensignierungen aus farbigen Kunststoffen, die durch Anwendung von ultravioletter Strahlung (UV) ausgehärtet werden. Da die mit einer Farbkennzeichnung versehenen Fasern weiter verarbeitet werden müssen, beispielsweise dadurch, daß sie in elektrische oder optische Kabel eingebracht, in aus Kunststoff oder Stahl bestehende Schutzröhrchen eingeführt bzw. aus solchen Fasern Faserbändchen hergestellt werden, genügt die heute übliche Farbkennzeichnung, beispielsweise durch eine IR-Ringsignierung, nicht immer den gestellten Anforderungen, beispielsweise hinsichtlich der Abriebfestigkeit. Wegen der durch die bekannte Ringsignierung bedingten inhomogenen rauhen Faseroberfläche kann es auch immer wieder Probleme bei der Weiterverarbeitung der Faser geben, ebenso ist oft eine Dämpfungserhöhung bei Temperaturwechseln im optischen Übertragungsweg nicht zu vermeiden. Aber auch eine einfache Strich- oder Streifensignierung kann ihre Nachteile haben, da abgesehen von dem erhöhten technischen Aufwand eine solche Farbkennzeichnung oft schwer zu unterscheiden ist.

Geht man im Zuge des steigenden Bedarfs optischer Übertragungswege zu Kabeln beispielsweise mit höherer Faserzahl, d. h. mit mehr als 12, über, dann bereitet die eindeutige Identifizierung der verwendeten Fasern schon deshalb Schwierigkeiten, weil nicht ausreichend unterscheidungskräftige Farben zur Verfügung stehen. Das gilt in gleicher Weise für aus einem Glas, z. B. Quarzglas, hergestellte optische Fasern wie für die heute immer häufiger und für bestimmte Übertragungswege eingesetzten Kunststoff-Fasern.

Ausgehend von diesem Stand der Technik liegt der Erfindung daher die Aufgabe zugrunde, die eindeutige Kennzeichnung einer beliebigen Anzahl von Fasern zu gewährleisten, darüberhinaus aber auch sicherzustellen, daß die einmal während des Fertigungsprozesses aufgebrachte Farbkennzeichnung unabhängig von den anschließenden Verfahrensschritten bei der Weiterverarbeitung erhalten bleibt. Die Übertragungseigenschaften der Fasern sollen auch bei Temperaturwechsel durch die gewählte Farbkennzeichnung nicht beeinflußt werden.

Gelöst wird diese Aufgabe gemäß der Erfindung dadurch, daß die Farbkennzeichnung von einer durchgehend sich über die Faserlänge erstreckenden durchsichtigen oder durchscheinenden farbigen Lackschicht überdeckt ist. Auf diese Weise ist sichergestellt, daß beispielsweise eine Farbkennzeichnung durch aufgebrachte Ringe in Weiterverarbeitungsprozessen nicht von der Faseroberfläche bzw. von der Oberfläche der die Fasern umschließenden Hülle abgetragen wird. Der Schutz der Farbkennzeichnung gegen mechanischen Abrieb ist sichergestellt, durch den glatten Oberflächenschutz mit vergleichmäßigtem Außendurchmesser ist ein problemloses Weiterverarbeiten der gekennzeichneten Faser möglich. Durch entsprechende Auswahl der für die weitere Schicht verwendeten Werkstoffe sind hohe Festigkeiten der weiteren Schicht zu erreichen, das bedeutet auf der anderen Seite, daß bei den während der Weiterverarbeitung der Faser oft unvermeidbaren erhöhten mechanischen Belastungen die optischen Eigenschaften des Lichtwellenleiters keine Beeinträchtigung erfahren, im Gegenteil eine Verbesserung der Übertragungseigenschaften feststellbar ist. Durch entsprechende Werkstoffauswahl läßt sich zudem die weitere Schicht als zusätzlicher Oberflächenschutz gegen Feuchtigkeit und Lösungsmittel verwenden, das bedeutet, daß mit einer entsprechend der Erfindung ausgebildeten Faser weitere Anwendungsbereiche der optischen Übertragungstechnik erschließbar sind. Da jede Farbkennzeichnung von der durchscheinenden oder durchsichtigen farbigen Lackschicht entsprechend der Erfindung unmittelbar nach Herstellung der Faser, d. h. vor jeder Weiterverarbeitung des Lichtwellenleiters, mechanisch geschützt ist, können auch beliebige Farbkombinationen und/oder beliebige Kennzeichnungskonfigurationen auf der erfindungsgemäßen Faser für beliebige Anwendungszwecke sicher angebracht werden.

Da die die Farbkennzeichnung überdeckende Lackschicht selbst farbig ist, ergibt sich eine Vielzahl von Farbkombinationen zur Identifizierung optischer Fasern. So kann auch eine Vielzahl von z. B. in einem Schutzröhrchen untergebrachter Fasern sicher auseinander gehalten werden. Die erste Variationsmöglichkeit ergibt sich z. B. durch eine Anzahl und/oder den Abstand farbiger Ringe, während die weitere Variation der Farbkennzeichnung in der Auswahl angepaßter Farben für die farbige Lackschicht liegt.

Bekannt ist bereits ein optisches Bändchenkabel (EP 0 581 680 Al), bei dem die parallel nebeneinander geführten Fasern eine Ringmarkierung aufweisen. Diese Ringmarkierung wird überdeckt von einer Umhüllung aus einem eine Antihaft-Komponente enthaltenden Material. Sie dient dazu, die Farbmarkierung während des Fertigungsprozesses zu schützen. Die Möglichkeiten der Identifizierung der optischen Fasern sind beschränkt auf die Ringmarkierung.

Zwar ist es auch bereits bekannt (JP 57040203), bei einer optischen Faser das sog. Primärcoating (erste Kunststoffschicht über der Glasfaser) aus einem farbigen Material herzustellen, dieses farbige Primärcoating wird aber durch weitere Schichten abgedeckt, so daß eine Identifizierung der jeweiligen optischen Faser erst nach Entfernen der Deckschichten möglich ist. Abgesehen davon ist die Kennzeichnung optischer Fasern durch Farben sehr eingeschränkt, eine größere Anzahl Fasern ist lediglich durch die Wahl unterschiedlicher Farben nicht hinreichend zu identifizieren.

Der besondere Vorteil der erfindungsgemäßen Lösung liegt ja gerade darin, durch die Kombination örtlich begrenzter Farbkennzeichnungsmittel (z. B. Farbringe) und diese erste Farbkennzeichnung überdeckende, weitere Farbkennzeichnungsmittel eine Vielzahl von Identifizierungsmerkmalen zu schaffen.

Als für die Zwecke der Erfindung geeignete Lacke sind beispielsweise solche auf Basis Polyimide, Polyester, Polyether, Polysulfon oder Polyurethan zu nennen.

Die Lacke können solche sein, die aufgrund Infrarotstrahlung aushärtbar sind, und daher als sogenannte IR-Lacke Eingang in die Technik gefunden haben, mit besonderem Vorteil wird man jedoch durch ultraviolette Strahlung aushärtende Lacke verwenden, das sind sogenannte UV-Lacke, die gegenüber den IR-Lacken eine höhere Viskosität aufweisen, und daher zur Vergleichmäßigung der weiteren Schicht wegen der darunter befindlichen und auf die ummantelte Faser aufgetragenen Farbkennzeichnung besonders geeignet sind.

Da es für die Zwecke der Erfindung darauf ankommt, neben einer sicheren und dauerhaften Farbkennzeichnung die mit der weiteren Schicht versehene optische Faser gegen von außen wirkende mechanische Kräfte zu stabilisieren und gleichzeitig weiter gegen Feuchtigkeit, Säuren und dergl. zu schützen, wird man in Durchführung der Erfindung die Dicke der weiteren Schicht in der Größenordnung von 1 - 10 µm, vorzugsweise 3 - 6 µm wählen.

Ein weiterer wesentlicher Vorteil einer erfindungsgemäßen Faser ist darin zu sehen, daß unterhalb der weiteren Schicht praktisch jede beliebige Farbe und Konfiguration der Kennzeichnung gewählt werden kann. Bringt man, wie es heute die Regel ist, eine Ringsignierung, etwa als Einfach- oder Doppelringe, auf die mit dem sogenannten Coating bedeckte Faser auf, dann erfolgt der Auftrag dieser Farbkennzeichnung entweder unmittelbar auf die äußere Coatingschicht oder auf eine das Coating überdeckende einheitliche Fasereinfärbung. Bereits diese Möglichkeit bietet eine Vielfalt von Varianten der farblichen Kennzeichnung. So kann beispielsweise mit Vorteil die Ringsignierung einer Faser aus Ringen gleicher Farbe bestehen, die in Faserrichtung unterschiedliche Abstände zueinander aufweisen, oder die Ringsignierung einer Faser besteht aus Ringen unterschiedlicher Farbe. Eine andere vorteilhafte Möglichkeit ist die, daß die Ringsignierung einer Faser aus Ringen gleicher oder unterschiedlicher Farbe besteht, die in Faserrichtung gleiche Abstände aufweisen. Selbstverständlich ist es auch möglich und vorteilhaft insbesondere dann, wenn eine Vielzahl von in einem optischen Kabel vorhandene Fasern sicher auseinandergehalten werden müssen, wenn die Ringsignierung einer Faser aus einer Kombination unterschiedlicher Abstände und unterschiedlicher Farben besteht.

Insbesondere dann, wenn die weitere Schicht als durchgehende Schutzschicht die Faser umschließt, kommt es darauf an, eine für die Zwecke der Erfindung geeignete Dicke der diese Ringsignierung bildenden Farbschicht zu wählen. Die Dicke der die Ringsignierung bildenden Farbschicht beträgt deshalb 0,5 - 5 µm, vorzugsweise 1 - 3 µm.

Wie bereits ausgeführt, sind beliebige Kennzeichnungskonfigurationen auf der Faseroberfläche bzw. auf dem die Oberfläche der Faser bildenden Coating möglich, statt der Ringsignierung kann deshalb auch eine Streifen- oder Strichsignierung aufgebracht oder nach einem weiteren Erfindungsgedanken in die außenliegende Schicht dieser Umhüllung integriert sein. In einem solchen Fall kann es ebenfalls vorteilhaft mitunter sein, auf eine bereits eingefärbte Faser zusätzlich eine Strich- oder Streifensignierung in einem anderen Farbton oder gar in einer anderen Farbkombination aufzubringen.

Ist ähnlich wie im Falle der Ringsignierung die Farbkennzeichnung auf die Oberfläche aufgebracht oder ist die Farbkennzeichnung mehr oder weniger in die darunter befindliche Oberfläche integriert, ist durch die gemäß der Erfindung vorgesehene weitere Schicht in jedem Fall sichergestellt, daß die Farbkennzeichnung dauerhaft und jederzeit identifizierbar verbleibt.

Was das Material der Farbkennzeichnung selbst betrifft, wird man hierfür beispielsweise einen IR-härtenden Lack einsetzen, vorteilhaft ist es aber auch, anstelle der IR-härtenden Lacke sogenannte UV-härtende Lacke für die Farbkennzeichnung zu verwenden.

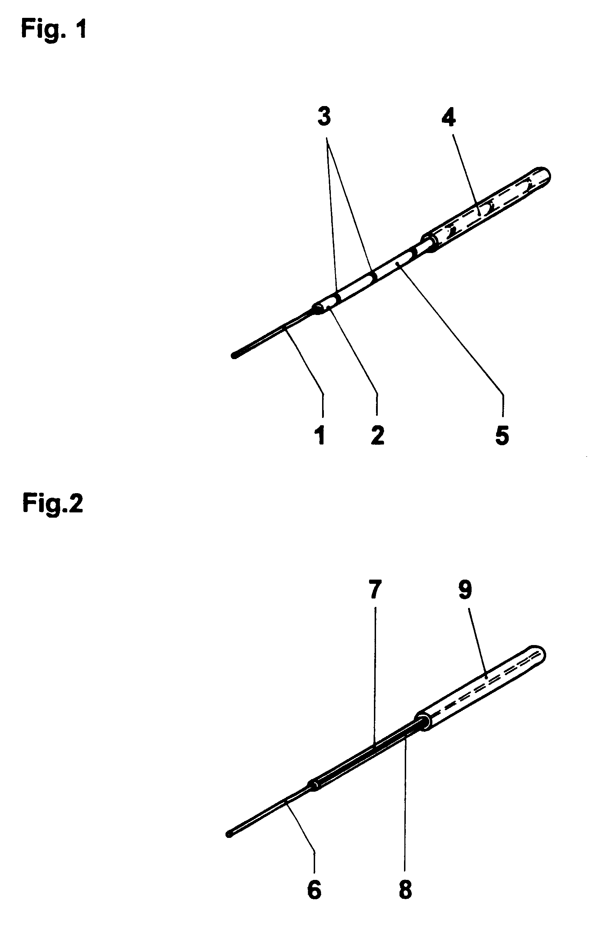

Die Erfindung sei anhand der in den Figuren 1 bis 3 dargestellten Ausführungsbeispiele näher erläutert.

Die in der Fig. 1 dargestellte optische Faser 1 mit Faserkern und Mantel z. B. aus einem Quarzglas weist das sogenannte Coating 2, das sind eine oder mehrere Kunststoffumhüllungen zum Schutz der Faser 1, auf. Unmittelbar auf diesem Coating 2 ist eine Farbkennzeichnung in Form aus in Abständen angeordneten Farbringen 3 vorgesehen, deren Material aus einem IR-oder UV-härtenden Lack besteht. Die Schichtdicke der Farbringe beträgt im Ausführungsbeispiel 3 - 4 µm, um diesen Betrag stehen die Farbringe 3 von dem Coating 2 ab, so daß bei der Weiterverarbeitung dieser Faser mit einem mechanischen Abrieb der Farbringe gerechnet werden muß. Um das mit Sicherheit auszuschließen, ist die erfindungsgemäße durchsichtige oder durchscheinende weitere Schicht 4 vorgesehen, diese überdeckt die mit der Farbkennzeichnung versehene Faser über die gesamte Länge. Als Material für diese weitere Schicht 4 dient beispielsweise ein UV-härtender Lack auf Basis Polyimide oder Polyurethan, der neben der Überdeckung der Farbringe 3 den Bereich 5 zwischen jeweils zwei Farbringen ausfüllt. Bei der angenommenen Dicke der Farbringe von 3 um beträgt die Dicke der weiteren Schicht 4 beispielsweise 5 µm, so daß sämtliche Farbringe 3 überdeckt und die Bereiche 5 zwischen jeweils zwei Farbringen 3 von dem Material der weiteren Schicht ausgefüllt sind. Ein durchgehender Schutz der Farbkennzeichnung ist so erreicht.

Im dargestellten Ausführungsbeispiel weisen die Farbringe 3 einen gleichen Abstand auf, die Abstände sind selbstverständlich auch zu variieren, ebenso kann die Farbkennzeichnung in Form der Farbringe 3 auch auf eine bereits eingefärbte Faser aufgebracht werden.

Weitere Farbvariationen und damit weitere Unterscheidungsmöglichkeiten sind dann gegeben, wenn erfindungsgemäß die weitere Schicht 4 farbig oder eingefärbt ist, beispielsweise aus einem farbigen Lack besteht. So können etwa schwarze oder blaue Einfach- oder Doppelringe 3 aus einem IR-härtenden Lack von einer gelb, rot, blau oder grün eingefärbten, vorteilhaft UV-härtenden und damit höher viskosen weiteren Lackschicht 4 überdeckt sein. Die farbigen Einfach- oder Doppelringe 3 sind problemlos identifizierbar, da auch die farbige weitere Schicht 4 entsprechend der Erfindung mindestens durchscheinend ist. Die Wahl kontrastreicher Farbenkombinationen erleichtert die Identifizierbarkeit der gekennzeichneten Faser.

Abweichend von der Fig. 1 zeigt die Fig. 2 eine Faser 6, aus Glas oder Kunststoff, die von der Hülle 7 überdeckt ist, die ihrerseits die Farbkennzeichnung trägt. Diese Farbkennzeichnung besteht aus längsverlaufenden Strichen oder Streifen 8 in beliebigem Farbton, wobei diese Kennzeichnung entweder, wie dargestellt, unmittelbar auf der Hülle 7 aufgebracht ist oder, falls auf die Hülle 7 eine über die Länge sich erstreckende gleichmäßige Farbkennzeichnung aufgebracht ist oder die selbst eingefärbt ist, sich auf dieser befindet. Die Strich- oder Streifenmarkierung kann sich wie die Farbringe 3 nach der Fig. 1 von der Oberfläche des für die Hülle 7 z. B. verwendeten Kunststoffes abheben, die Streifen oder Striche 8 können aber auch in das Kunststoffmaterial integriert sein. In allen Fällen ist zum Schutz der Farbkennzeichnung und mit dem Ziel, auch für Kabel mit einer Vielzahl von optischen Fasern diese sicher durch beliebige Kennzeichnungskonfigurationen auseinanderhalten zu können, die weitere Schicht 9 vorgesehen, beispielsweise aus einem Lack auf Basis Polyester oder Polyether. Dieser Lack kann wieder ein Klarlack sein, oder, wie bereits anhand der Fig. 1 erläutert, ein farbiger, durchscheinender Lack.

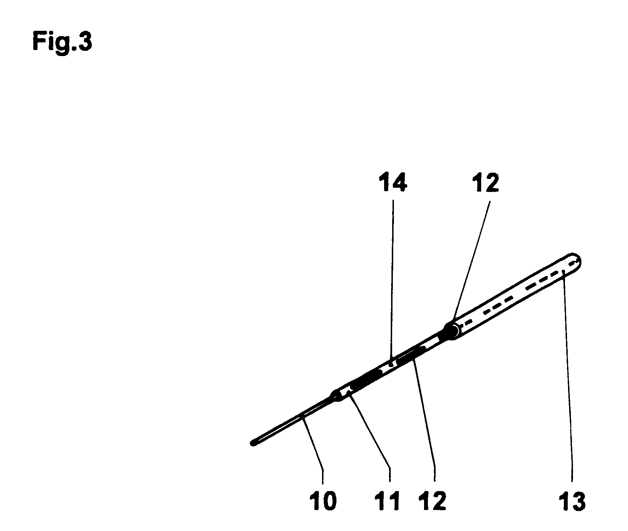

Die Fig. 3 zeigt eine Ausführungsform der Erfindung, bei der die optische Faser 10, die wiederum aus Glas oder Kunststoff bestehen kann, von der sogenannten Hülle 11, im Falle von Glasfasern auch als Coating bezeichnet, umgeben ist, auf der unmittelbar oder über eine durchgehende farbige Zwischenschicht die Farbkennzeichnung aufgebracht ist. Diese besteht in dem dargestellten Ausführungsbeispiel aus in Abständen angeordneten Strichen oder Streifen 12, ggf. unterschiedlicher Länge, auch periodisch wiederkehrend, die eine definierte Dicke aufweisen und damit über die Hülle 11 hinausragen. Überdeckt werden diese unterbrochenen Striche oder Streifen, mit auch voneinander möglichem unterschiedlichem Abstand durch die weitere Schicht 13, die die gesamte optische Faser abdeckt und damit die Striche oder Streifen 12 sicher vor einem Abrieb schützt. Um ein gleichmäßiges Verlaufen des für die weitere Schicht verwendeten Lackes während des Fertigungsprozesses sicherzustellen, wird man beispielsweise einen UV-härtenden Lack beispielsweise auf Basis Polysulfon oder Polyurethan verwenden, der die Zwischenräume 14 zwischen jeweils zwei Streifen oder Strichen 12 sicher ausfüllt und vor allem gewährleistet, daß die Farbkennzeichnung in der aufgebrachten Form, d. h. als deutliche Markierung mit klaren Randbereichen bestehen bleibt.

Eine weitere Differenzierung so gekennzeichneter Fasern ist wiederum dann gegeben, wenn die weitere Schicht 13 aus einem durchscheinenden farbigen Lack besteht, dessen Farbton gegenüber den darunter liegenden Farben oder Farbkombinationen unterscheidungskräftig ist.

## Patentansprüche

1. Optische Faser mit einem Faserkern (1) und einem den Kern umschließenden Mantel (2) aus einer oder mehreren Kunststoffschichten, sowie einer örtlich begrenzten Farbkennzeichnung (3) auf oder in der einen Kunststoffschicht bzw. der äußeren der Kunststoffschichten, dadurch gekennzeichnet, daß die Farbkennzeichnung (3) von einer durchgehend sich über die Faserlänge erstreckenden durchsichtigen oder durchscheinenden farbigen Lackschicht (4) überdeckt ist.

2. Optische Faser nach Anspruch 1, dadurch gekennzeichnet, daß die Dicke der farbigen Lackschicht (4) 1 bis 10 µm, vorzugsweise 3 bis 6 µm beträgt.

3. Optische Faser nach Anspruch 1 oder 2, dadurch gekennzeichnet, daß das für die farbige Lackschicht (4) verwendete Material ein UV-härtender Lack ist.

4. Optische Faser nach Anspruch 1 oder einem der vorhergehenden, dadurch gekennzeichnet, daß das für die farbige Lackschicht (4) verwendete Material ein IR-härtender Lack ist.

5. Optische Faser nach Anspruch 3 oder 4, dadurch gekennzeichnet, daß durchsichtige oder durchscheinende Lacke auf Basis Polyimide, Polyester, Polyether, Polysulfon oder Polyurethan verwendet sind.

6. Optische Faser nach Anspruch 1 oder einem der vorhergehenden, dadurch gekennzeichnet, daß die Farbkennzeichnung (3) aus einer Ringsignierung besteht.

7. Optische Faser nach Anspruch 6, dadurch gekennzeichnet, daß die Ringsignierung aus einem IR-härtenden und die farbige Lackschicht (4) aus einem UV-härtenden Lack besteht.

8. Optische Faser nach Anspruch 6, dadurch gekennzeichnet, daß die Ringsignierung als Zusatzkennzeichnung auf eine bereits eingefärbte Faser aufgebracht ist.

9. Optische Faser nach Anspruch 6 oder einem der vorhergehenden, dadurch gekennzeichnet, daß die Dicke der die Ringsignierung bildenden Farbschicht 0,5 bis 5 µm, vorzugsweise 1 bis 3 µm beträgt.

10. Optische Faser nach Anspruch 6 oder einem der vorhergehenden, dadurch gekennzeichnet, daß die Ringsignierung einer Faser aus Ringen gleicher Farbe besteht, die in Faserrichtung unterschiedliche Abstände zueinander aufweisen.

11. Optische Faser nach Anspruch 6 oder einem der vorhergehenden, dadurch gekennzeichnet, daß die Ringsignierung einer Faser aus Ringen unterschiedlicher Farbe besteht.

12. Optische Faser nach Anspruch 6 oder einem der vorhergehenden, dadurch gekennzeichnet, daß die Ringsignierung einer Faser aus Ringen gleicher oder unterschiedlicher Farbe besteht, die in Faserrichtung gleiche Abstände aufweisen.

13. Optische Faser nach Anspruch 9 oder einem der vorhergehenden, dadurch gekennzeichnet, daß die Ringsignierung einer Faser aus einer Kombination unterschiedlicher Abstände und unterschiedlicher Farben besteht.

14. Optische Faser nach einem der Ansprüche 1 - 5, dadurch gekennzeichnet, daß die Farbkennzeichnung (3) aus einer in Längsrichtung verlaufenden Strich- oder Streifensignierung besteht.

15. Optische Faser nach Anspruch 14, dadurch gekennzeichnet, daß die Strich- oder Streifensignierung in die außenliegende Schicht der Umhüllung integriert ist.

16. Optische Faser nach Anspruch 1 oder einem der vorhergehenden, dadurch gekennzeichnet, daß die Farbkennzeichnung (3) aus einem IR-härtenden Lack besteht.

17. Optische Faser nach Anspruch 1 oder einem der vorhergehenden, dadurch gekennzeichnet, daß die Farbkennzeichnung (3) aus einem UV-härtenden Lack besteht.

18. Optische Faser nach Anspruch 1 oder einem der vorhergehenden, dadurch gekennzeichnet, daß die optische Faser aus Glas, insbesondere Quarzglas besteht.

19. Optische Faser nach einem der Ansprüche 1 - 17, dadurch gekennzeichnet, daß die optische Faser eine Kunststoff-Faser ist.

## Claims

1. Optical fibre having a core (1) and a sheath (2), which latter surrounds the core and consists of one or more plastics layers, as well as localised colour coding (3) on or in the single plastics layer or the outermost plastics layer, characterised in that the colour coding (3) is covered by a transparent or translucent coloured lacquer coating (4) extending continuously over the length of the fibre.

2. Optical fibre according to claim 1, characterised in that the thickness of the coloured lacquer coating (4) amounts to from 1 to 10 µm, preferably from 3 to 6 µm.

3. Optical fibre according to claim 1 or claim 2, characterised in that the material used for the coloured lacquer coating (4) is a UV-curing lacquer.

4. Optical fibre according to claim 1 or any one of the preceding claims, characterised in that the material used for the coloured lacquer coating (4) is an IR-curing lacquer.

5. Optical fibre according to claim 3 or claim 4, characterised in that polyimide-, polyester-, polyether-, polysulfone- or polyurethane-based transparent or translucent lacquers are used.

6. Optical fibre according to claim 1 or any one of the preceding claims, characterised in that the colour coding (3) consists of annular marking.

7. Optical fibre according to claim 6, characterised in that the annular marking consists of an IR-curing lacquer and the coloured lacquer coating (4) consists of a UV-curing lacquer.

8. Optical fibre according to claim 6, characterised in that the annular marking is applied as supplementary coding to a fibre which has already been coloured.

9. Optical fibre according to claim 6 or any one of the preceding claims, characterised in that the thickness of the coloured layer forming the annular marking amounts to from 0.5 to 5 µm, preferably from 1 to 3 µm.

10. Optical fibre according to claim 6 or any one of the preceding claims, characterised in that the annular marking of a fibre consists of rings of the same colour which are spaced differently from each other in the direction of the fibre.

11. Optical fibre according to claim 6 or any one of the preceding claims, characterised in that the annular marking of a fibre consists of differently coloured rings.

12. Optical fibre according to claim 6 or any one of the preceding claims, characterised in that the annular marking of a fibre consists of rings of the same or different colours, which are uniformly spaced in the direction of the fibre.

13. Optical fibre according to claim 9 or any one of the preceding claims, characterised in that the annular marking of a fibre consists of a combination of different spacings and different colours.

14. Optical fibre according to any one of claims 1 to 5, characterised in that the colour coding (3) consists of dashed or striped marking extending in the longitudinal direction.

15. Optical fibre according to claim 14, characterised in that the dashed or striped marking is incorporated into the outer layer of the cladding.

16. Optical fibre according to claim 1 or any one of the preceding claims, characterised in that the colour coding (3) consists of an IR-curing lacquer.

17. Optical fibre according to claim 1 or any one of the preceding claims, characterised in that the colour coding (3) consists of a UV-curing lacquer.

18. Optical fibre according to claim 1 or any one of the preceding claims, characterised in that the optical fibre consists of glass, in particular silica glass.

19. Optical fibre according to any one of claims 1 to 17, characterised in that the optical fibre is a plastics fibre.

## Revendications

1. Fibre optique comprenant une âme (1) entourée d'une enveloppe (2) composée elle-même d'une ou plusieurs couches de matière plastique ainsi qu'un marquage couleur (3) localisé et appliqué sur ou insérée dans une des couches en matière plastique intérieures ou extérieure, caractérisé par le fait que le marquage couleur (3) est recouvert d'une couche de vernis (4) transparent ou translucide et s'étendant sur toute la longueur de la fibre.

2. Fibre optique selon la revendication 1 caractérisée par le fait que l'épaisseur de la couche de vernis coloré (4) se situe entre 1 et 10 µm et de préférence entre 3 et 6 µm.

3. Fibre optique selon les revendications 1 ou 2 caractérisée par le fait que le matériau utilisé pour la couche de vernis coloré (4) est constitué d'un vernis durcissant sous l'action des rayons ultraviolets (UV).

4. Fibre optique selon la revendication 1 ou une de celles qui précèdent caractérisée par le fait que le matériau utilisé pour la couche de vernis coloré (4) est constitué d'un vernis durcissant sous l'action des rayons infrarouges (IR).

5. Fibre optique selon les revendications 3 ou 4 caractérisée par le fait que les vernis utilisés sont à base de polyimide, polyester, polyéther, polysulfone ou polyuréthanne.

6. Fibre optique selon la revendication 1 ou une des celles qui précèdent caractérisée par le fait que le marquage couleur (3) est constitué d'un marquage annulaire.

7. Fibre optique selon la revendication 6 caractérisée par le fait que le marquage annulaire est constituée d'une couche de vernis durcissant sous l'action des rayons IR et que la couche de vernis coloré (4) est constituée d'un vernis durcissant sous l'action des rayons UV.

8. Fibre optique selon la revendication 6 caractérisée par le fait que le marquage annulaire servant de marquage supplémentaire est appliqué sur une fibre déjà colorée.

9. Fibre optique selon la revendication 6 ou une de celles qui précèdent caractérisée par le fait que l'épaisseur de la couche de couleur formant le marquage annulaire se situe entre 0,5 et 5 µm et de préférence entre 1 et 3 µm.

10. Fibre optique selon la revendication 6 ou une de celles qui précèdent caractérisée par le fait que le marquage annulaire d'une fibre est constitué d'anneaux de la même couleur présentant des espacements variables dans le sens de la fibre.

11. Fibre optique selon la revendication 6 ou une de celles qui précèdent caractérisée par le fait que le marquage annulaire d'une fibre est constitué d'anneaux de couleurs différentes.

12. Fibre optique selon la revendication 6 ou une de celles qui précèdent caractérisée par le fait que le marquage annulaire d'une fibre est constitué d'anneaux de la même couleur ou de couleurs différentes présentant des espacements identiques dans le sens de la fibre.

13. Fibre optique selon la revendication 9 ou une de celles qui précèdent caractérisée par le fait que le marquage annulaire d'une fibre est constitué d'anneaux présentant une combinaison d'espacements et de couleurs variables.

14. Fibre optique selon les revendications 1 à 5 caractérisée par le fait que le marquage couleur (3) est constitué d'un marquage sous forme de traits ou de bandes dans le sens longitudinal.

15. Fibre optique selon la revendication 14 caractérisée par le fait que le marquage sous forme de traits ou de bandes est intégré dans la couche extérieure de l'enveloppe.

16. Fibre optique selon la revendication 1 ou une de celles qui précédent caractérisée par le fait que le marquage couleur (3) est constitué d'un vernis durcissant sous l'action des rayons IR.

17. Fibre optique selon la revendication 1 ou une de celles qui précèdent caractérisée par le fait que le marquage couleur (3) est constitué d'un vernis durcissant sous l'action des rayons UV.

18. Fibre optique selon la revendication 1 ou une de celles qui précèdent caractérisée par le fait que la fibre optique est composé de verre et plus particulièrement de verre au quartz.

19. Fibre optique selon les revendications 1 à 17 caractérisée par le fait que la fibre optique est composée de matière plastique.
